# EUROPEAN PATENT APPLICATION

(11) **EP 3 246 520 A2**
(43) Date of publication of application: **22.11.2017**
(21) Application number: 17171314.2
(22) Date of filing: 16.05.2017
(51) Int. Cl.: F01D 5/18, F01D 5/14

(54) **METHOD AND APPARATUS TO ENHANCE LAMINAR FLOW FOR GAS TURBINE ENGINE COMPONENTS**

(30) Priority: 16.05.2016 US 201615155146
(71) Applicant: United Technologies Corporation, Farmington, CT 06032 (US)
(72) Inventor: AUXIER, James Tilsley, Bloomfield, CT Connecticut 06002 (US)
(74) Representative: Hull, James Edward

(57) **Abstract**

A gas turbine engine component (60) has a component body (66) configured to be positioned within a flow path (80) of a gas turbine engine, wherein the component body (66) includes at least one internal cavity (78). At least one inlet opening (82) is formed in an outer surface (84) of the component body (66) to direct flow into the at least one internal cavity (78). At least one outlet (86) from the internal cavity (78), wherein the at least one outlet (86) is located at a lower pressure area in the internal cavity (78) than the at least one inlet opening (82) such that flow is drawn into the internal cavity (78) from the at least one inlet opening (82) and expelled out the at least one outlet (86).

## Description

### BACKGROUND OF THE INVENTION

Gas turbine engines are continually being driven to provide higher thrust efficiencies to maximize performance. As hot engine gases flow around airfoils in the turbine section, turbulent flow can be generated along an external surface of the airfoils, which adversely affects efficiencies. One proven method to improve efficiency includes optimizing airfoil/endwall shapes and minimizing turbine cooling air usage to reduce friction and pressure drag around the airfoil.

Airfoil friction drag is created by a combination of friction loss and mixing loss. Friction loss from near-wall turbulence that impacts a boundary layer along the external surface of the airfoil can result in a significant energy loss. In a cooled airfoil configuration, film cooling air may be targeted towards different areas or via different shaped holes to lessen the impact on friction and mixing loss factors. In an uncooled airfoil configuration, such features are not available making it difficult to improve efficiency.

### SUMMARY OF THE INVENTION

In one aspect, a gas turbine engine component has a component body configured to be positioned within a flow path of a gas turbine engine, wherein the component body includes at least one internal cavity. At least one inlet opening is formed in an outer surface of the component body to direct flow into the at least one internal cavity. At least one outlet from the internal cavity, wherein the at least one outlet is located at a lower pressure area in the internal cavity than the at least one inlet opening such that flow is drawn into the internal cavity from the at least one inlet opening and expelled out the at least one outlet.

In an embodiment, the component body comprises at least one of an airfoil in a turbine or compressor, a platform, or a transition duct.

In another embodiment according to any of the previous embodiments, the component body comprises an airfoil having a leading edge, a trailing edge, and pressure and suction side walls extending from the leading edge to the trailing edge, and wherein the airfoil extends from a base to a tip.

In another embodiment according to any of the previous embodiments, at least one inlet opening comprises a plurality of inlet openings formed in one or both of the pressure and suction side walls.

In another embodiment according to any of the previous embodiments, the leading edge is free from inlet openings.

In another embodiment according to any of the previous embodiments, at least one outlet comprises at least one opening to the external surface that is located near or at the trailing edge.

In another embodiment according to any of the previous embodiments, the component body is not subjected to cooling airflow.

In another embodiment according to any of the previous embodiments, wherein flow is drawn into the internal cavity to maintain laminar boundary layer attachment along the component body.

In another embodiment according to any of the previous embodiments, spacing between adjacent holes or slots is on the order of 10:1 to 20:1 as a ratio of a distance along the outer surface between the adjacent holes or slots to a width of the holes or slots.

In another aspect, a gas turbine engine has an airfoil configured to be positioned within a flow path of a gas turbine engine, the airfoil having a leading edge, a trailing edge, and pressure and suction side walls extending from the leading edge to the trailing edge, and wherein the airfoil includes at least one internal cavity; At least one inlet opening is formed in an outer surface of the airfoil to direct flow into the at least one internal cavity. At least one outlet is from the internal cavity, wherein at least one outlet is located at a lower pressure area in the internal cavity than the at least one inlet opening such that flow is drawn into the internal cavity from the at least one inlet opening and expelled out the at least one outlet.

In an embodiment, at least one inlet opening comprises a plurality of inlet holes or slots.

In another embodiment according to any of the previous embodiments, the plurality of inlet holes or slots are formed in at least one of the pressure and suction side walls.

In another embodiment according to any of the previous embodiments, the leading edge is free from inlet holes or slots.

In another embodiment according to any of the previous embodiments, at least one outlet comprises at least one opening to the external surface that is located near or at the trailing edge.

In another embodiment according to any of the previous embodiments, wherein flow is drawn into the internal cavity to maintain laminar boundary layer attachment along the component body.

In another embodiment according to any of the previous embodiments, the gas turbine engine includes a compressor section, a combustor section downstream of the compressor section, and a turbine section downstream of the combustor section, wherein the turbine section includes at least a high pressure turbine downstream of the combustor section and a low pressure turbine downstream of the high pressure turbine, and wherein the airfoil is located within the low pressure turbine.

In another aspect, a method of enhancing laminar flow for a gas turbine engine component includes the steps of: a) positioning a component body within a flow path of a gas turbine engine, wherein the component body includes at least one internal cavity; b) directing a portion of the flow through at least one inlet opening formed in an outer surface of the component body and into the at least one internal cavity; c) expelling the flow from the at least one internal cavity via at least one outlet from the component body; and d) locating the at least one outlet opening at a lower pressure area in the internal cavity than the at least one inlet opening such that flow is drawn into the internal cavity from the at least one inlet opening and expelled out the at least one outlet.

In an embodiment, the component body comprises one of an airfoil, a platform or a transition duct in at least one of a mid-turbine frame or turbine exhaust case and includes drawing flow into the internal cavity to maintain laminar boundary layer attachment along the component body.

In another embodiment according to any of the previous embodiments, the component body comprises an airfoil having a leading edge, a trailing edge, and pressure and suction side walls extending from the leading edge to the trailing edge, and includes forming the at least one inlet opening as a plurality of inlet openings that are formed in one of or both of the pressure and suction side walls, forming the leading edge to be free from inlet openings, and locating the at least one outlet near or at the trailing edge.

In another embodiment according to any of the previous embodiments, the airfoil is free from internal cooling channels.

The foregoing features and elements may be combined in any combination without exclusivity, unless expressly indicated otherwise.

These and other features may be best understood from the following drawings and specification.

### BRIEF DESCRIPTION OF THE DRAWINGS

Figure 1 is a schematic representation of one example of a gas turbine engine.
Figure 2 is a schematic representation of a top of an airfoil incorporating the subject invention.
Figure 3 is a side view of the airfoil of Figure 2.
Figure 4 is graph depicting an amount of turbulent flow generated as flow moves from a leading edge to trailing edge of an airfoil that does not include the subject invention.
Figure 5 is graph depicting an amount of turbulent flow generated as flow moves from a leading edge to trailing edge of an airfoil that does include the subject invention.
Figure 6 is a schematic representation of a transition duct incorporating the subject invention.
Figure 7 is a schematic representation of a platform incorporating the subject invention.

### DETAILED DESCRIPTION

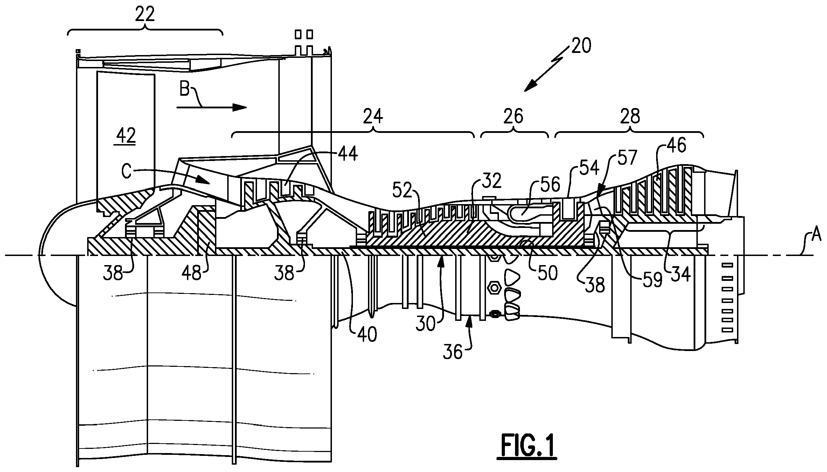

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle (not shown), while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 metres). The flight condition of 0.8 Mach and 35,000 ft (10,668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed" as disclosed herein according to one non-limiting embodiment is less than about 1150 ft / second (350.5 m/s).

Airfoils located downstream of combustor section 26, such as stator vanes and rotor blades in the turbine section 28, for example, operate in a high-temperature environment. The airfoils located in the high pressure turbine 54 are subjected to higher temperatures than airfoils located in the low pressure turbine 46. Airfoils that are exposed to high temperatures, such as those in the high pressure turbine 54, typically include cooling circuits with internal cooling channels and film cooling channels that direct a flow of cooling air through the airfoil to remove heat, reduce friction and mixing loss factors, and thus prolong the useful life of the airfoil. Airfoils in the low pressure turbine are not actively cooled in this manner as they are not subjected to temperatures as high as those experienced by airfoils in the high pressure turbine 54.

By configuring these non-cooled low pressure turbine airfoils in the manner described below, efficiency can be improved and friction and mixing loss factors can be reduced. This efficiency increase is a direct result of configuring these airfoils such that a laminar boundary layer can be maintained as hot combustion gases flow along the external surface of the airfoils.

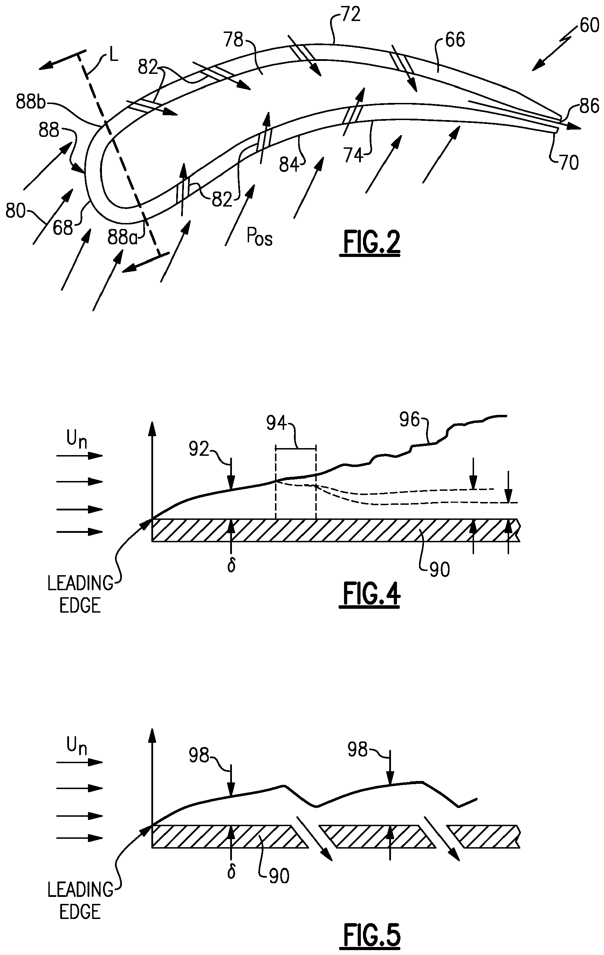

Figures 2-3 show an example of a turbine rotor blade 60 from the low pressure turbine 46 which has a root section 62, a platform 64, and an airfoil body 66. Root section 62 is connected to a rotor in the low pressure turbine 46 (Figure 1) as known. The airfoil body 66 includes a leading edge 68, a trailing edge 70, a suction side wall 72, and a pressure side wall 74. The airfoil body 66 extends from a base at the platform 64 to a tip 76. The platform 64 connects the airfoil body 66 to the root section 62. The leading edge 68, trailing edge 70, suction side wall 72, and pressure side wall 74 extend outwardly away from the platform 64 in a direction opposite from the root section 62. Suction side wall 72 and pressure side wall 74 connect leading edge 68 and trailing edge 70.

As shown in Figure 2, the airfoil body 66 includes an internal cavity 78. This cavity 78 is not a cooling cavity or cooling passage. This cavity 78 is typically formed in the airfoil bodies 66 of the low pressure turbine 46 as a weight savings measure. The airfoil body 66 is positioned within a hot gas flow path 80 and has at least one inlet opening 82 formed in an outer surface 84 of the airfoil body 66 to direct hot gas into the internal cavity 78. The airfoil body 66 also includes at least one outlet opening 86 formed in the outer surface 84 to expel the hot exhaust gas. The outlet opening 86 is located at a lower pressure area in the internal cavity 78 than the at least one inlet opening 82 such that hot gas is drawn into the internal cavity 78 via the at least one inlet opening 82 and expelled out the at least one outlet opening 86 to maintain laminar boundary layer attachment along the outer surface 84 as hot gas flows against the airfoil body 66.

As shown in Figure 2, the internal cavity 78 has an internal pressure Pi and the hot gas flow path 80 has an external pressure Pos. A pressure differential is maintained such that there is a sufficiently low pressure level at the inlet to controllably ingest hot gas, in combination with a sufficiently high pressure level in the cavity 78 to expel the hot gas via the outlet opening 86. As such, Pi is less than Pos at the inlet opening 82 and Pi is greater than Pos at the outlet opening 86. In one example, a pressure ratio at the inlet of Pos/Pi is approximately 1.5-1.10, while the pressure ratio at the outlet of Pos/Pi is approximately .90-.95.

By drawing the hot exhaust gases into an upstream end of the internal cavity 78 and expelling the gases via a downstream end of the cavity 78, a laminar boundary layer can be maintained along the pressure and/or suction sides of the airfoil body 66, which helps prevent stalled flow separation. Essentially, this is comparable to film cooling but in reverse. Instead of drawing cooling air into the internal cavity to cool the airfoil via film cooling holes, hot exhaust gases are drawn into the internal cavity via inlet openings to help maintain laminar flow.

In the example shown in Figures 2-3, the at least one inlet opening 82 comprises a plurality of inlet openings 82 formed in one of or both of the pressure 74 and suction 72 side walls. The inlet openings 82 can be apertures, holes, slots, etc. and can have various shapes and/or sizes. Further, the leading edge 68 is free from inlet openings 82. In one example, a showerhead region 88 (identified by section line L in Figure 2) of the airfoil body 66 does not include any inlet openings 82. The shower head region 88 encompasses the leading edge 68 and transition areas 88a, 88b that extend from the leading edge 68 along a short distance of the upstream portion of the pressure 74 and suction 72 side walls. The hot exhaust gas hits this showerhead region 88 which then directs the gas along the sides of the body 66 where a portion of the gas is then ingested via the inlet openings 82, with a remaining portion of the gas continuing to flow along the sides of the airfoil body 66. By not having inlet openings 82 in the showerhead region 88, it prevents a direct input of a large amount of hot exhaust gas and instead allows a more controlled metering ingestion of the gas which allows the laminar boundary layer to be maintained.

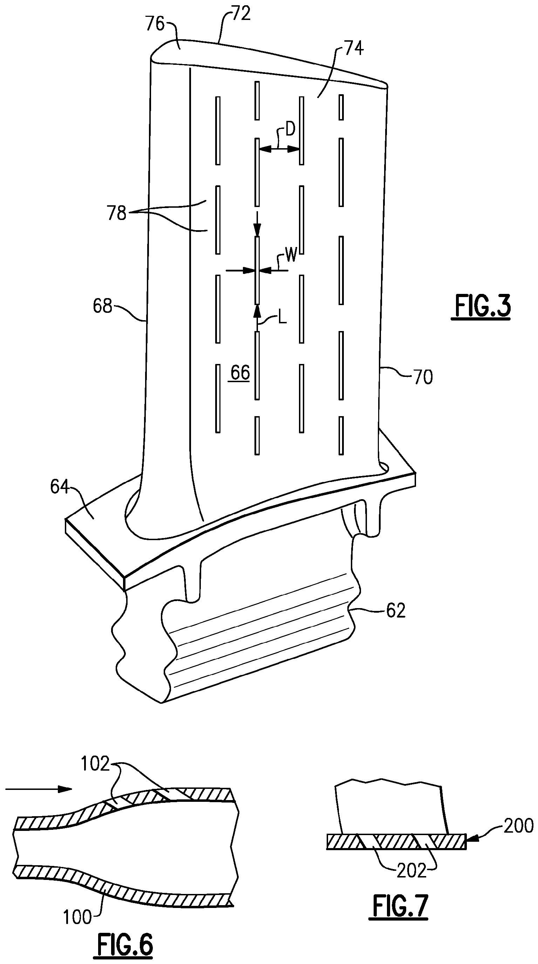

Figure 3 shows one example of the inlet openings 82 comprising slots. In this example the slots extend in a generally axial direction along the length of the body 66. Each slot has a width W and a length L. In one example, the length L is longer than the width W. The lengths L and widths W can be the same for each slot or variable. In one example, the spacing between the slots is on the order of 10:1 to 20:1, as the ratio of a distance D along the surface between slots to the slot width W.

In one example, the at least one outlet opening 86 is located near or at the trailing edge 70 of the airfoil body 66. This location helps provide the desired transition from a lower pressure area of the internal cavity 78 at the inlet to a lower pressure area at the outlet. The internal cavity 78 is wider at the leading edge end of the airfoil body and subsequently narrows in a direction toward the trailing edge 70, which results in an increase in pressure needed to expel the hot exhaust gases.

As discussed above, the airfoil body 66 is not subjected to cooling airflow and does not include internal cooling passages. As such, the airfoil body 66 should be comprised of a material having a melting point temperature that is higher than a temperature of the hot gas flowing around the airfoil body 66. Optionally, it is possible to achieve higher operating temperature applicability for the component body by using coatings and thermal conductive enhancements.

Figures 4 and 5 are a comparison between flow conditions for a traditional airfoil configuration (Figure 4) and flow conditions for an airfoil body incorporating the subject invention (Figure 5). Each graph has a y-axis that corresponds to an increasing outer distance from the external surface 84 of the airfoil body 66 and an x-axis that corresponds to an increasing distance starting from the leading edge 68 and going towards the trailing edge 70.

Figure 4 is a flat plate nominal boundary layer diagram that shows a viscous sub-layer region 90 that is generally constant along the airfoil body 66 from the leading edge 68 to the trailing edge 70. A laminar region of flow is indicated at 92 in a region that is just downstream from the leading edge 68. A transition region 94 shows the beginning of a departure from laminar flow. This transition region 94 ends approximately midway along the airfoil body 66 and then turns into a turbulent flow region 96 which becomes more turbulent in a direction of the trailing edge 70.

Figure 5 is a flat plate enhanced laminar boundary layer diagram that shows a similar viscous sub-layer region 90 that is generally constant along the airfoil body from the leading edge 68 to the trailing edge 70; however, in this configuration there is no turbulent flow region. A laminar region of flow is indicated at 98 in a region that is just downstream from the leading edge 68, and as the flow starts to approach the transition region of Figure 4, the flow reaches at least one inlet opening 82, which brings the flow back into a laminar boundary layer. This pattern continues down the length of the airfoil body 66 such that the flow never moves out of the laminar flow region, i.e. turbulent flow is not experienced by the airfoil body 66 of Figure 5.

Further, it should be noted that while the subject invention is described as being used in an airfoil in a low pressure turbine, the invention could also be used in other areas such as transition ducts or platforms, for example. Figure 6 shows an example of a transition duct 100 as used in a mid-turbine frame 57 or turbine exhaust case. The duct 100 includes inlet openings 102 that ingest gases in a manner that is similar to that described above. Figure 7 shows an example of platform laminar flow where a platform 200 includes inlet openings 202 that ingest gases in a manner that is similar to that described above.

The subject invention utilizes hot gas inflow to maintain a laminar boundary layer along the pressure and/or suction sides of a component body 66, and to help prevent stalled flow separation. At least one internal cavity 78 of an otherwise uncooled blade, vane, or duct is maintained at an appropriate pressure level, low enough to selectively and controllably ingest hot gas from the external gas path but still high enough to expel the gas via an outlet from the component body 66. As discussed above, ingestion is through holes or thin radial slots with internal metering features. This ingestion helps to maintain laminar boundary layer attachment and prevents its decomposition into a turbulent boundary layer and viscous sub-layer.

This concept has been successfully demonstrated in flight tests for usage on aircraft wings to decrease both aerodynamic drag and frictional heating at high velocities. As a side effect, based on flat and conical plate studies, a laminar boundary layer created on an airfoil reduces the recovery factor towards a minimum of 0.81-0.83; otherwise the recovery factor approaching a more turbulent flow regime increases closer to 0.90. Some of the benefits of the subject invention in this configuration include the maintenance of laminar boundary layers in flow at extremely high Reynolds numbers (Re), to increase the turbine stage efficiency of an uncooled airfoil by as much as 1-2%. Further, with a recovery factor r = (Te-T)/(To/T) at typical LPT conditions (where Te = Taw = adiabatic wall temperature; T = Tm = mean stream temperature; and To = Ts = stagnation temperature), the lower recovery factor decreases the adiabatic wall temperature by a delta of as much as 14-15 degrees Fahrenheit (7.8-8.3 K). The nominally lower adiabatic wall temperature can be traded into other factors such as durability, thrust and/or efficiency. With thrust, increasing the LPT inlet temperature by 10-15 degrees Fahrenheit (5.6-8.3 K) will equal a +1% core thrust. For single crystal superalloys, a 14 degree Fahrenheit (7.8 K) increase in wall metal temperature yields approximately 40% better creep life (by the trade factor 2^(-ΔT/30°F) or 2^(-ΔT*/16.7 K)). ΔT = delta metal temperature (degrees Fahrenheit) ΔT* = delta metal temperature (K).

In another example, this concept could be used to maintain boundary layer attachment for compressor airfoils or fan blades in a manner similar to turbine airfoils. In this application there would be aero efficiency and stall margin benefits. In one example, the compressor airfoil or fan blade is located within a flow path and would include at least one inlet to an internal cavity as described above. With a compressor blade, the ingested air could be bleed out of the internal cavity through an outlet via an attachment to a secondary air system. The universal application for this concept to work is the availability of a relative suction pressure inside the airfoil versus the outside flow path.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine component (60; 100;200) comprising:
a component body (66) configured to be positioned within a flow path (80) of a gas turbine engine (20), wherein the component body (66) includes at least one internal cavity (78);
at least one inlet opening (82;102;202) formed in an outer surface (84) of the component body (66) to direct flow into the at least one internal cavity (78); and
at least one outlet (86) from the internal cavity (78), wherein the at least one outlet (86) is located at a lower pressure area in the internal cavity (78) than the at least one inlet opening (82) such that flow is drawn into the internal cavity (78) from the at least one inlet opening (82) and expelled out the at least one outlet (86).

2. The gas turbine engine component according to claim 1, wherein the component body (66) comprises an airfoil (60) having a leading edge (68), a trailing edge (70), and pressure and suction side walls (74,72) extending from the leading edge (68) to the trailing edge (70), and wherein the airfoil (60) extends from a base to a tip (76).

3. The gas turbine engine component according to claim 2, wherein the at least one inlet opening (82) comprises a plurality of inlet openings (82) formed in one or both of the pressure and suction side walls (74,72).

4. The gas turbine engine component according to any preceding claim, wherein the component body (66) is not subjected to cooling airflow.

5. The gas turbine engine component according to any preceding claim, wherein the spacing between adjacent holes or slots (82) is on the order of 10:1 to 20:1 as a ratio of a distance (D) along the outer surface between the adjacent holes or slots to a width (W) of the holes or slots (82).

6. The gas turbine engine component according to any preceding claim, wherein the at least one inlet opening (82) comprises a plurality of inlet holes or slots (82).

7. The gas turbine engine component according to claim 6, wherein the plurality of inlet holes or slots (82) are formed in at least one of the pressure and suction side walls (74,72).

8. The gas turbine engine component according to any preceding claim, wherein the leading edge (68) is free from inlet holes, slots or openings.

9. The gas turbine engine component according to any preceding claim, wherein the at least one outlet (86) comprises at least one opening to the outer surface (84) that is located near or at the trailing edge (70).

10. The gas turbine engine component according to any preceding claim, wherein flow is drawn into the internal cavity (78) to maintain laminar boundary layer attachment along the component body (66).

11. The gas turbine engine component according to any preceding claim, wherein the component body (66) comprises at least one of an airfoil (60) in a turbine or compressor, a platform (200), or a transition duct (100).

12. A gas turbine engine (20) comprising:
an airfoil (60) configured to be positioned within a flow path (80) of the gas turbine engine, the airfoil (60) having a or the leading edge (68), a or the trailing edge (70), and pressure and suction side walls (74,72) extending from the leading edge (68) to the trailing edge (70) wherein the airfoil (60) comprises the gas turbine engine component of claims 1 to 10.

13. The gas turbine engine according to any of claims 7 to 12, including:
a compressor section (24);
a combustor section (26) downstream of the compressor section (24); and
a turbine section (28) downstream of the combustor section (26), wherein the turbine section (28) includes at least a high pressure turbine (54) downstream of the combustor section (26) and a low pressure turbine (46) downstream of the high pressure turbine (54), and wherein the airfoil (60) is located within the low pressure turbine (46).

14. A method of enhancing laminar flow for a gas turbine engine component (60;100;200) comprising the steps of:
a) positioning a component body (66) within a flow path (80) of a gas turbine engine (20), wherein the component body (66) includes at least one internal cavity (78);
b) directing a portion of the flow through at least one inlet opening (82;102;202) formed in an outer surface (84) of the component body (66) and into the at least one internal cavity (78);
c) expelling the flow from the at least one internal cavity (78) via at least one outlet (86) from the component body (66); and
d) locating the at least one outlet (86) at a lower pressure area in the internal cavity (78) than the at least one inlet opening (82) such that flow is drawn into the internal cavity (78) from the at least one inlet opening (82) and expelled out the at least one outlet (86).

15. The method according to claim 14, wherein the component body (66) comprises one of an airfoil (60), a platform (200) or a transition duct (100) in at least one of a mid-turbine frame (57) or turbine exhaust case and including:
drawing flow into the internal cavity (78) to maintain laminar boundary layer attachment along the component body (66),
wherein, optionally, the component body (66) comprises an airfoil (60) having a leading edge (68), a trailing edge (70), and pressure and suction side walls (74,72) extending from the leading edge (68) to the trailing edge (70), and including:
forming the at least one inlet opening (82) as a plurality of inlet openings (82) that are formed in one of or both of the pressure and suction side walls (74,72);
forming the leading edge (68) to be free from inlet openings; and
locating the at least one outlet (86) near or at the trailing edge (70),
wherein, optionally, the airfoil (60) is free from internal cooling channels.
